# FASCICULE DE BREVET EUROPEEN

(11) **EP 3 636 045 B1**
(45) Date de publication et mention de la délivrance du brevet: **22.11.2023**
(21) Numéro de dépôt: 18736989.7
(22) Date de dépôt: 01.06.2018
(51) Int. Cl.: H05B 6/06

(54) **SYSTÈME DE CUISSON**
KOCHSYSTEM
COOKING SYSTEM

(30) Priorité: 08.06.2017 FR 1755145
(43) Date de publication de la demande: 15.04.2020
(73) Titulaire: SEB S.A., 69130 Ecully (FR)
(72) Inventeur: GAILHARD, Thierry, 69970 Chaponnay (FR); CUBIZOLLES, Serge, 38780 Oytier Saint Oblas (FR); GHECHOUA, Karim, 69800 Saint Priest (FR)
(74) Mandataire: SEB Développement
(86) Numéro de dépôt international: PCT/FR2018/051278
(87) Numéro de publication internationale: WO 2018/224759

(56) Documents cités:
- EP-A1- 1 005 822
- FR-A- 766 048
- GB-A- 1 096 659
- US-A1- 2010 000 980

## Description

La présente invention se rapporte au domaine technique général des systèmes de cuisson comprenant un récipient de cuisson et un dispositif pour chauffer le récipient de cuisson contenant des boissons ou des aliments.

Plus particulièrement, la présente invention se rapporte à un système de cuisson comprenant un récipient de cuisson et un dispositif de chauffage dudit récipient de cuisson, ainsi qu'à des procédés d'utilisation d'un tel système de cuisson.

Il est connu du document FR2766048 un système de cuisson comprenant :
- un récipient de cuisson comprenant un corps et un insert ferromagnétique à température de Curie déterminée disposé dans le corps,
- un dispositif de chauffage pour le récipient de cuisson destiné à être positionné à un emplacement déterminé du dispositif de chauffage dans lequel ledit récipient de cuisson est susceptible d'être positionné pour être chauffé par ledit dispositif de chauffage, ledit dispositif de chauffage comprenant des moyens de chauffage, lesdits moyens de chauffage étant aptes à chauffer le récipient de cuisson et son insert lorsque le récipient de cuisson est positionné à son emplacement déterminé du dispositif de chauffage.

Ainsi, il est connu d'utiliser un générateur à induction pour chauffer un récipient de cuisson utilisant un matériau ferromagnétique à point de Curie déterminé pour réaliser un insert sous forme d'une grille ou d'une plaque située dans le fond amagnétique d'un ustensile de cuisine.

En dessous d'une température inférieure au point de Curie, l'insert est ferromagnétique et donc sensible au champ magnétique créé par le générateur à induction. Dans ces conditions, le récipient de cuisson chauffe.

Au-delà du point de Curie, l'insert devient amagnétique, il n'est plus sensible au champ magnétique du générateur à induction, le récipient de cuisson ne chauffe plus.

Un tel insert est donc un moyen pour protéger le récipient de cuisson contre des surchauffes dues à des utilisations à sec, voire réguler la température du récipient.

Néanmoins, cette solution ne fonctionne qu'avec un dispositif de chauffage par induction.

En outre, il est connu du document FR2715245A1, un dispositif limiteur de température destiné à assurer la sécurité d'un système de chauffage quelconque.

Ce dispositif limiteur de température comprend une pastille fixe à température de Curie déterminée disposée à l'extrémité d'un tube et attirant ou non un aimant mobile dans le tube selon que la pastille présente un état ferromagnétique ou amagnétique.

En outre, l'aimant est mécaniquement relié à un doigt rigide pouvant entraîner la torsion d'une lame flexible pour ouvrir ou fermer un contact électrique selon la position de l'aimant.

Cependant, la pastille et l'aimant sont engagés dans le même tube dont l'extrémité est au contact du foyer de cuisson.

Un dispositif analogue est également connu du document GB1096659.

De tels dispositifs limiteurs de température opèrent donc en fonction de la température du foyer de cuisson et non en fonction de la température du récipient de cuisson disposé sur le foyer de cuisson.

Ainsi, ce dispositif réalise une fonction de sécurité limitant la température maximale du foyer de cuisson, et non une fonction de limitation ou de régulation de la température de cuisson des aliments ou de la boisson disposés dans le récipient.

Aussi, la présente invention a pour but de résoudre tout ou partie des inconvénients mentionnés ci-dessus, notamment en proposant un dispositif de chauffage proposant une fonction de limitation ou de régulation de la température en fonction de la température du récipient.

A cet effet, la présente invention se rapporte à un système de cuisson comportant :
- un récipient de cuisson comprenant un corps et un insert ferromagnétique à température de Curie déterminée disposé dans le corps,
- un dispositif de chauffage pour le récipient de cuisson destiné à être positionné à un emplacement déterminé du dispositif de chauffage dans lequel ledit récipient de cuisson est susceptible d'être positionné pour être chauffé par ledit dispositif de chauffage,

ledit dispositif de chauffage comprenant :
   - des moyens de chauffage, lesdits moyens de chauffage étant aptes à chauffer le récipient de cuisson et son insert lorsque le récipient de cuisson est positionné à son emplacement déterminé du dispositif de chauffage,
ledit système de cuisson étant caractérisé en ce que le dispositif de chauffage comprend :
   - un aimant positionné de manière à ce que l'insert du récipient de cuisson se trouve en regard dudit aimant lorsque le récipient de cuisson est positionné à son emplacement déterminé, ledit aimant étant mobile entre une première position proximale de l'insert et une deuxième position distale de l'insert lorsque le récipient de cuisson est positionné à son emplacement déterminé,
   - un moyen de détection de la position de l'aimant,
   - une unité de traitement d'un signal délivré par le moyen de détection,
et en ce que le dispositif de chauffage présente un premier mode de fonctionnement dans lequel l'aimant est dans sa première position et le chauffage du récipient de cuisson par les moyens de chauffage est autorisé, et un deuxième mode de fonctionnement dans lequel l'aimant est dans sa deuxième position et le chauffage du récipient de cuisson par les moyens de chauffage est interdit,
le passage du deuxième mode de fonctionnement vers le premier mode de fonctionnement étant réalisé suite à l'attraction magnétique de l'aimant sur l'insert lorsque le récipient de cuisson est positionné à son emplacement déterminé et que l'insert présente une température inférieure à sa température de Curie, et
le passage du premier mode de fonctionnement vers le deuxième mode de fonctionnement étant réalisé suite à la perte de l'attraction magnétique de l'aimant sur l'insert lorsque le récipient de cuisson est positionné à son emplacement déterminé et que l'insert présente une température supérieure ou égale à sa température de Curie ou bien lorsque le récipient de cuisson est retiré de son emplacement déterminé.

Ainsi, le fonctionnement d'un tel système de cuisson est fonction de la température de l'insert disposé sur le récipient, ce qui permet de réaliser une fonction de limitation ou de régulation de la température de cuisson des aliments ou de la boisson disposée dans le récipient.

Par ailleurs, un tel système de cuisson selon l'invention est compatible avec tout type de moyens de chauffage.

Selon un aspect de l'invention, le moyen de détection comprend un contact électrique ou une barrière optique d'un contact optique relié mécaniquement à l'aimant par l'intermédiaire d'un moyen de liaison.

Selon un aspect de l'invention, le moyen de détection comprend un capteur magnétique positionné de manière fixe relativement au dispositif de chauffage et présentant un premier état de détection dans lequel la valeur d'une grandeur caractéristique du champ magnétique mesurée par le capteur magnétique dépasse une valeur seuil prédéfinie lorsque l'aimant est dans sa première position, et un deuxième état de détection dans lequel la valeur de la grandeur caractéristique du champ magnétique mesurée par le capteur magnétique ne dépasse pas la valeur seuil prédéfinie lorsque l'aimant est dans sa deuxième position et que le récipient de cuisson est positionné à son emplacement déterminé.

Selon un aspect de l'invention, le capteur magnétique est monté sur un circuit magnétique agencé pour canaliser les lignes de champ magnétique de l'aimant.

Selon un aspect de l'invention, l'unité de traitement du signal délivré par le moyen de détection est agencée pour réaliser au moins une des actions suivantes :
- couper l'alimentation des moyens de chauffage, ou
- réguler la puissance des moyens de chauffage, et/ou
- déclencher une alerte à destination d'un utilisateur.

Selon un aspect de l'invention, le système comprend des moyens de rappel de l'aimant vers sa deuxième position, les moyens de rappel comprenant de préférence un ressort.

Selon un aspect de l'invention, l'aimant se déplace entre sa première position et sa deuxième position selon une direction transversale à une surface plane de l'insert lorsque le récipient de cuisson est positionné à son emplacement déterminé.

Selon un aspect de l'invention, les moyens de chauffage comprennent un inducteur magnétique, un foyer radiant, un foyer halogène, un foyer par conduction thermique, et/ou un foyer par convection thermique.

Selon un aspect de l'invention, l'aimant est positionné de manière excentrée par rapport à l'emplacement déterminé pour le récipient de cuisson dans le dispositif de chauffage.

Selon un aspect de l'invention, le dispositif comprend une pluralité d'aimants, chacune de la première position et de la deuxième position d'un aimant étant associée respectivement au premier mode de fonctionnement et au deuxième mode de fonctionnement du dispositif de chauffage.

Selon un aspect de l'invention, le dispositif comprend des moyens d'indexation pour indiquer une position relative du récipient de cuisson par rapport au dispositif de chauffage lorsque le récipient de cuisson est positionné à son emplacement déterminé du dispositif de chauffage.

Selon un aspect de l'invention, l'insert est positionné dans le fond du récipient.

Selon un aspect de l'invention, le fond comprend une pluralité d'inserts présentant chacun des températures de Curie déterminées différentes.

Selon un aspect de l'invention, les inserts sont répartis le long de tout ou partie de la circonférence d'un même cercle.

Selon un aspect de l'invention, le récipient de cuisson est un ustensile de cuisine ou bien une cuve amovible d'un appareil électrique.

Selon un aspect de l'invention le système de cuisson comprend un kit de récipients de cuisson comprenant une pluralité de récipients de cuisson de même type tels que décrits précédemment, dans lequel est/sont disposé(s) un ou plusieurs inserts à température de Curie déterminée, ladite ou au moins une desdites température(s) de Curie déterminée(s) étant différente(s) d'un récipient de cuisson de même type à un autre.

Selon un aspect de l'invention le système de cuisson comprend un kit d'inserts amovibles pour un récipient de cuisson tel que décrit précédemment ou un kit de récipients de cuisson tel que décrit précédemment, dans lequel chaque insert comprend des moyens de fixation complémentaires de moyens de fixations disposés sur le ou les récipients de cuisson, par exemple du type quart de tour, à baïonnette, ou du type filetage hélicoïdal, chaque insert du kit d'inserts présentant une température de Curie déterminée différente d'un insert à l'autre.

La présente invention se rapporte également à un procédé d'utilisation d'un système de cuisson tel que décrit précédemment comprenant un dispositif de chauffage et un récipient de cuisson tels que décrits précédemment, comprenant une étape consistant à déplacer en rotation le récipient de cuisson dans son emplacement déterminé du dispositif de chauffage de manière à amener un insert déterminé parmi la pluralité d'inserts, en regard de l'aimant du dispositif de chauffage.

La présente invention se rapporte également à un procédé d'utilisation d'un système de cuisson tel que décrit précédemment et comprenant un dispositif de chauffage et un récipient de cuisson tels que décrits précédemment de manière à ce que chaque insert parmi la pluralité d'inserts soit en regard d'un aimant parmi la pluralité d'aimants, comprenant une étape consistant à sélectionner un couple aimant-insert pour définir le premier mode de fonctionnement et le deuxième mode de fonctionnement du dispositif de chauffage.

D'autres avantages et caractéristiques de l'invention ressortiront mieux à la lecture de la description détaillée de l'invention faite à titre illustratif et non limitatif en référence aux figures qui illustrent tout ou partie d'un dispositif de chauffage selon l'invention.
La figure 1 illustre un premier mode de fonctionnement d'un dispositif de chauffage d'un système de cuisson selon l'invention.
La figure 2 illustre un deuxième mode de fonctionnement d'un dispositif de chauffage d'un système de cuisson selon l'invention.
La figure 3 illustre une variante d'un récipient de cuisson d'un système de cuisson selon l'invention.
La figure 4 illustre un kit de récipients de cuisson d'un système de cuisson selon l'invention.
La figure 5 illustre un kit d'inserts d'un système de cuisson selon l'invention.

Seuls les éléments nécessaires à la compréhension de l'invention ont été représentés. Pour faciliter la lecture des dessins, les mêmes éléments portent les mêmes références d'une figure à l'autre.

Un système 300 de cuisson selon l'invention comprend un récipient de cuisson 10 et un dispositif de chauffage 1.

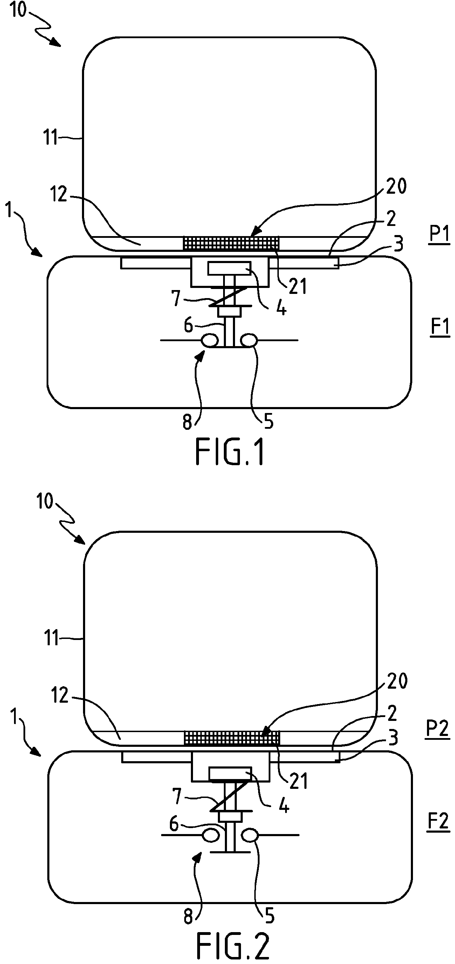

Comme illustré à la figure 1, le dispositif de chauffage 1 comprend un emplacement 2 déterminé dans lequel un récipient de cuisson 10 est susceptible d'être positionné pour être chauffé par ledit dispositif de chauffage 1.

Un tel emplacement 2 déterminé comprend par exemple un foyer de cuisson dans le cas d'une plaque de cuisson ou bien le fond du logement pour une cuve amovible dans le cas d'un appareil électrique de cuisson.

Le récipient de cuisson 10 comprend quant à lui un corps 11 comportant un fond 12.

Le corps 11 peut être réalisé aussi bien en matériau amagnétique qu'en matériau ferromagnétique.

Dans l'exemple présenté, le récipient de cuisson 10 comprend un insert 20 ferromagnétique présentant une température de Curie TCx déterminée.

Cet insert 20 présente la forme d'un disque et est positionné dans le fond 12 du récipient de cuisson 10.

De manière avantageuse, l'insert 20 présente une surface plane 21 orientée en direction de l'emplacement 2 déterminé.

En outre, le dispositif de chauffage 1 comprend des moyens de chauffage 3 aptes à chauffer le récipient de cuisson 10 et son insert 20 lorsque le récipient de cuisson 10 est positionné à son emplacement 2 déterminé du dispositif de chauffage 1.

Ces moyens de chauffage 3 comprennent par exemple un inducteur magnétique, un foyer radiant, un foyer halogène, un foyer par conduction thermique, et/ou un foyer par convection thermique, pouvant fonctionner à l'électricité ou au gaz selon le cas.

Le dispositif de chauffage 1 comprend également un aimant 4 positionné de manière à ce que l'insert 20 du récipient de cuisson 10 se trouve en regard dudit aimant 4 lorsque le récipient de cuisson 10 est positionné à son emplacement 2 déterminé.

Dans un premier mode de réalisation de l'invention, l'aimant 4 est positionné de manière centrée par rapport à l'emplacement 2 déterminé du récipient de cuisson 10 dans le dispositif de chauffage 1.

Cet aimant 4 est mobile entre une première position P1 proximale de l'insert 20 illustrée à la figure 1 et une deuxième position P2 distale de l'insert 20 illustrée à la figure 2 lorsque le récipient de cuisson 10 est positionné à son emplacement 2 déterminé.

Dans l'exemple présenté, l'aimant 4 se déplace entre sa première position P1 et sa deuxième position P2 selon une direction transversale à la surface plane 21 de l'insert 20 lorsque le récipient de cuisson 10 est positionné à son emplacement 2 déterminé.

En outre, le dispositif de chauffage 1 comprend un moyen de détection 8 de la position de l'aimant 4.

Un tel moyen de détection 8 peut être du type mécanique ou bien magnétique.

Enfin, le dispositif de chauffage 1 comprend une unité de traitement (non illustrée) du signal délivré par le moyen de détection 8.

Cette unité de traitement comprend par exemple un microcontrôleur.

Cette unité de traitement du signal délivré par le moyen de détection 8 est agencée pour réaliser au moins une des actions suivantes :
- couper l'alimentation des moyens de chauffage 3 afin de réaliser automatiquement une fonction de limitation, ou
- réguler la puissance des moyens de chauffage 3 afin de réaliser automatiquement une fonction de régulation.

La fonction de limitation peut par exemple être réalisée en coupant l'alimentation des moyens de chauffage 3 soit en interrompant définitivement une alimentation électrique grâce à un interrupteur soit en coupant une alimentation au gaz grâce à une électrovanne.

La fonction de régulation peut par exemple être réalisée en coupant momentanément une alimentation électrique des moyens de chauffage 3 jusqu'à ce que l'aimant 4 revienne dans sa première position P1.

En plus de ces fonctions, l'unité de traitement peut également allumer ou éteindre un voyant en vue de signaler ou d'alerter l'utilisateur sur le mode de fonctionnement dans lequel se trouve le dispositif de chauffage 1.

Ainsi, en fonction de la position P1, P2 de l'aimant 4, l'unité de traitement sera en mesure de faire fonctionner le dispositif de chauffage 1 selon plusieurs modes de fonctionnement.

C'est ainsi que le dispositif de chauffage 1 présente un premier mode de fonctionnement F1 dans lequel l'aimant 4 est dans sa première position P1 et le chauffage du récipient de cuisson 10 par les moyens de chauffage 3 est autorisé, et un deuxième mode de fonctionnement F2 dans lequel l'aimant 4 est dans sa deuxième position P2 et le chauffage du récipient de cuisson 10 par les moyens de chauffage 3 est interdit.

Le passage du deuxième mode de fonctionnement F2 vers le premier mode de fonctionnement F1 est réalisé suite à l'attraction magnétique de l'aimant 4 sur l'insert 20 lorsque le récipient de cuisson 10 est positionné à son emplacement 2 déterminé et que l'insert 20 présente une température inférieure à sa température de Curie TCx déterminée.

A l'inverse, le passage du premier mode de fonctionnement F1 vers le deuxième mode de fonctionnement F2 est réalisé suite à la perte de l'attraction magnétique de l'aimant 4 sur l'insert 20 lorsque le récipient de cuisson 10 est positionné à son emplacement 2 déterminé et que l'insert 20 présente une température supérieure ou égale à sa température de Curie TCx déterminée ou bien lorsque le récipient de cuisson 10 est retiré de son emplacement 2 déterminé.

Bien entendu, dans le cas où le corps 11 du récipient de cuisson 10 serait réalisé en matériau ferromagnétique, alors il ne faut pas que le corps 11 à lui seul puisse maintenir l'aimant 4 dans sa première position P1 lorsque la température de l'insert 20 est supérieure ou égale à sa température de Curie TCx déterminée.

Le positionnement de l'aimant 4 par rapport à l'insert 20 permet de s'affranchir de cette difficulté.

Dans l'exemple illustré aux figures 1 et 2, le moyen de détection 8 comprend un contact électrique 5 relié mécaniquement à l'aimant 4 par l'intermédiaire d'un moyen de liaison 6.

Ce contact électrique 5 a pour fonction de provoquer un changement d'état d'un signal électrique pouvant être exploité par l'unité de traitement du dispositif de chauffage 1.

Néanmoins, ce changement d'état pourrait être obtenu par tout autre moyen équivalent apte à réaliser cette fonction, par exemple une barrière optique d'un contact optique ou bien un capteur magnétique positionné de manière fixe relativement au dispositif de chauffage 1.

Dans le cas d'un capteur magnétique, celui-ci présente un premier état de détection dans lequel la valeur d'une grandeur caractéristique du champ magnétique mesurée par le capteur magnétique dépasse une valeur seuil prédéfinie lorsque l'aimant 4 est dans sa première position P1, et un deuxième état de détection dans lequel la valeur de la grandeur caractéristique du champ magnétique mesurée par le capteur magnétique ne dépasse pas la valeur seuil prédéfinie lorsque l'aimant 4 est dans sa deuxième position P2 et que le récipient de cuisson 10 est positionné à son emplacement 2 déterminé.

Idéalement, un tel capteur magnétique est monté sur un circuit magnétique agencé pour canaliser les lignes de champ magnétique de l'aimant 4.

Comme illustré sur les figures 1 et 2, le dispositif de chauffage 1 peut également comprendre des moyens de rappel 7 de l'aimant 4 vers sa deuxième position P2.

Dans l'exemple présenté, ces moyens de rappel 7 comprennent un ressort.

Néanmoins, avec un agencement approprié de l'aimant 4 par rapport à l'insert 20, il est possible de faire en sorte que la seule force de gravité suffise à ramener l'aimant 4 vers sa deuxième position P2.

Dans un deuxième mode de réalisation de l'invention, l'aimant 4 est positionné de manière excentrée par rapport à l'emplacement 2 déterminé du récipient de cuisson 10 dans le dispositif de chauffage 1.

Un tel dispositif de chauffage 1 peut être utilisé avec un récipient de cuisson 10 comprenant une pluralité d'inserts 20a, 20b, 20c présentant chacun des températures de Curie TCx déterminées différentes.

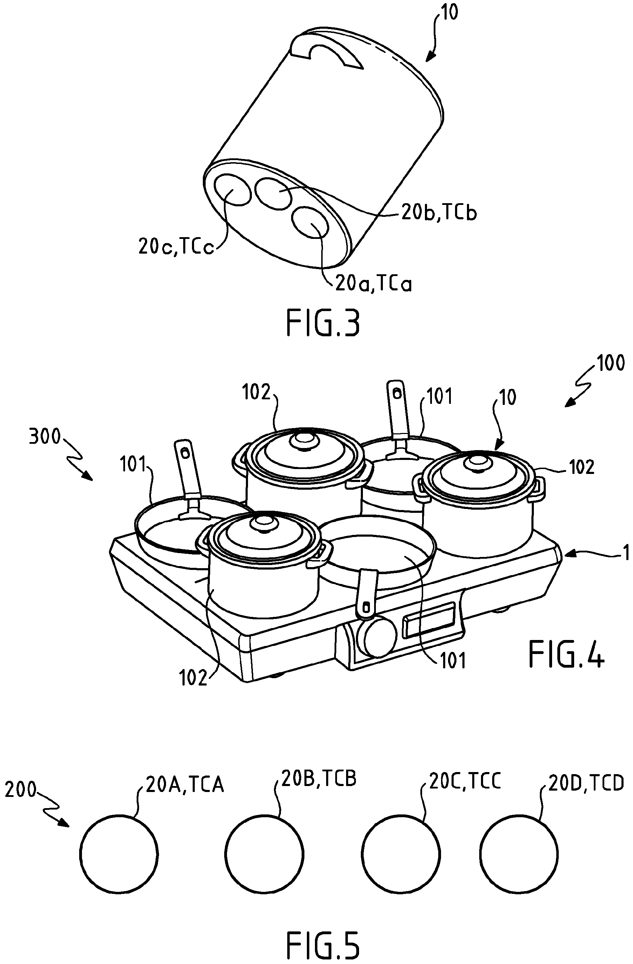

Comme illustré à la figure 3, ces inserts 20a, 20b, 20c sont répartis sur le fond du récipient de cuisson 10 le long de tout ou partie de la circonférence d'un même cercle.

Par exemple, l'insert 20a présente une première température de Curie TCa, l'insert 20b présente une deuxième température de Curie TCb et l'insert 20c présente une troisième température de Curie TCc, les températures TCa, TCb et TCc étant toutes différentes.

Ainsi, au cours d'une étape d'un procédé d'utilisation d'un système 300 de cuisson comprenant un tel récipient de cuisson 10 et un tel dispositif de chauffage 1, l'utilisateur peut choisir la température de limitation ou de régulation qui lui convient parmi ces trois températures TCa, TCb et TCc en déplaçant en rotation le récipient de cuisson 10 dans son emplacement 2 déterminé du dispositif de chauffage 1 de manière à amener un insert 20a, 20b, 20c déterminé parmi la pluralité d'inserts 20a, 20b, 20c, en regard de l'aimant 4 du dispositif de chauffage 1.

Afin d'aider l'utilisateur à positionner correctement le récipient de cuisson 10 sur son emplacement 2 déterminé de manière à faire coïncider un insert particulier 20a, 20b ou 20c avec l'aimant 4 du dispositif de chauffage 1, le dispositif de chauffage 1 comprend des moyens d'indexation pour indiquer une position relative du récipient de cuisson 10 par rapport au dispositif de chauffage 1.

De manière analogue, selon une variante le dispositif de chauffage 1 peut comprendre une pluralité d'aimants 4, chacune de la première position P1 et de la deuxième position P2 d'un aimant 4 étant associée respectivement au premier mode de fonctionnement F1 et au deuxième mode de fonctionnement F2 du dispositif de chauffage 1.

Chacun des modes de fonctionnement F1, F2 de chacun des aimants 4 peut ainsi être associé à une commande particulière, par exemple un réglage particulier de la puissance de chauffage des moyens de chauffage 3.

Il est également possible d'envisager qu'un tel dispositif de chauffage 1 avec une pluralité d'aimants 4 puisse fonctionner avec un récipient de cuisson 10 présentant une pluralité d'inserts 20a, 20b, 20c de manière à ce que chaque insert 20 parmi la pluralité d'inserts 20a, 20b, 20c soit en regard d'un aimant 4 parmi la pluralité d'aimants 4.

Au cours d'une étape d'un procédé d'utilisation d'un système 300 de cuisson comprenant un tel récipient de cuisson 10 et un tel dispositif de chauffage 1, l'utilisateur par le biais d'une interface utilisateur (non illustrée) sélectionne alors un couple aimant-insert pour définir le premier mode de fonctionnement F1 et le deuxième mode de fonctionnement F2 du dispositif de chauffage 1.

Cette sélection correspond en réalité à la sélection de la température de Curie TCx de l'insert 20 du couple aimant-insert à partir de laquelle le changement de mode de fonctionnement est réalisé.

Comme illustré à la figure 4, il est également possible de prévoir un kit 100 de récipients de cuisson 10 comprenant des récipients de cuisson 10 de même type dans lequel est/sont disposé(s) un ou plusieurs inserts 20 à température de Curie TCx déterminée, ladite ou au moins une desdites température(s) de Curie TCx déterminée(s) étant différente(s) d'un récipient de cuisson 10 de même type à un autre.

On entend par « même type » de récipient de cuisson 10, des récipients de cuisson 10 ayant des formes et des dimensions sensiblement semblables.

Ainsi, sur la figure 4 est illustré un premier kit de poêles 101 et un deuxième kit de casseroles 102.

Toutes les poêles du premier kit 101 présentent au moins un insert 20 à température de Curie TCx déterminée différente de celle d'une autre poêle du premier kit de poêles 101.

De même, toutes les casseroles du deuxième kit 102 présentent au moins un insert 20 à température de Curie TCx déterminée différente de celle d'une autre casserole du deuxième kit de casseroles 102.

Bien entendu, des récipients de cuisson 10 de types différents pourraient également se présenter sous forme de kit 100 avec au moins un insert 20 à température de Curie TCx déterminée différente de celle d'un autre récipient de cuisson 10 du kit 100 de récipients de cuisson 10 sans pour autant sortir du cadre de l'invention.

Afin de pouvoir facilement distinguer les différents récipients de cuisson 10 d'un même kit 100, chaque récipient de cuisson 10 peut présenter un signe distinctif particulier, par exemple une couleur.

D'autre part, afin de réduire l'encombrement d'un tel kit 100 de récipients de cuisson 10, il est également concevable de prévoir un kit d'inserts 200 amovibles pour un récipient de cuisson 10 seul ou bien pour un ou plusieurs récipients de cuisson 10 d'un kit 100 dans lequel les inserts 20 du kit d'inserts 200 comprennent des moyens de fixation complémentaires de moyens de fixations disposés sur le ou les récipients de cuisson 10.

Ces moyens de fixation complémentaires (non illustrés) comprennent par exemple des moyens de fixations du type quart de tour, à baïonnette, ou du type filetage hélicoïdal, chaque insert 20 du kit d'inserts 200 présentant une température de Curie TCx déterminée différente d'un insert à l'autre.

Ainsi, la figure 5 montre un kit d'inserts 200 comprenant quatre inserts 20A, 20B, 20C et 20D présentant chacun des températures de Curie différentes TCA, TCB, TCC et TCD.

Tout comme pour les ustensiles du kit 100 de récipients de cuisson 10, ces inserts 20A, 20B, 20C et 20D du kit d'inserts 200 peuvent chacun présenter un signe distinctif particulier, par exemple une couleur.

La présente invention se rapporte également à un système 300 de cuisson comportant une combinaison parmi le dispositif de chauffage 1 décrit précédemment et un récipient de cuisson 10 ou un kit 100 de récipients de cuisson 10 ou bien une combinaison parmi le dispositif de chauffage 1 décrit précédemment et un récipient de cuisson 10 et un kit d'inserts 200 ou un kit 100 de récipients de cuisson 10 et un kit d'inserts 200 tels que décrits précédemment.

Bien que l'invention ait été décrite en liaison avec des exemples particuliers de réalisation, il est bien évident qu'elle n'y est nullement limitée.

Des modifications restent possibles, notamment du point de vue de l'agencement et de la constitution des différents éléments ou par substitution d'équivalents techniques, sans sortir pour autant du domaine de protection de l'invention.

## Revendications

1. Système de cuisson (300) comportant :
- un récipient de cuisson (10) comprenant un corps (11) et un insert (20) ferromagnétique à température de Curie (TCx) déterminée disposé dans le corps (11),
- un dispositif de chauffage (1) pour le récipient de cuisson (10) destiné à être positionné à un emplacement (2) déterminé du dispositif de chauffage (1) dans lequel ledit récipient de cuisson (10) est susceptible d'être positionné pour être chauffé par ledit dispositif de chauffage (1),
ledit dispositif de chauffage (1) comprenant :
- des moyens de chauffage (3), lesdits moyens de chauffage (3) étant aptes à chauffer le récipient de cuisson (10) et son insert (20) lorsque le récipient de cuisson (10) est positionné à son emplacement (2) déterminé du dispositif de chauffage (1),
ledit système de cuisson étant **caractérisé en ce que** le dispositif de chauffage (3) comprend :
- un aimant (4) positionné de manière à ce que l'insert (20) du récipient de cuisson (10) se trouve en regard dudit aimant (4) lorsque le récipient de cuisson (10) est positionné à son emplacement (2) déterminé, ledit aimant (4) étant mobile entre une première position (P1) proximale de l'insert (20) et une deuxième position (P2) distale de l'insert (20) lorsque le récipient de cuisson (10) est positionné à son emplacement (2) déterminé,
- un moyen de détection (8) de la position de l'aimant (4),
- une unité de traitement d'un signal délivré par le moyen de détection (8),
et **en ce que** le dispositif de chauffage (1) présente un premier mode de fonctionnement (F1) dans lequel l'aimant (4) est dans sa première position (P1) et le chauffage du récipient de cuisson (10) par les moyens de chauffage (3) est autorisé, et un deuxième mode de fonctionnement (F2) dans lequel l'aimant (4) est dans sa deuxième position (P2) et le chauffage du récipient de cuisson (10) par les moyens de chauffage (3) est interdit,
le passage du deuxième mode de fonctionnement (F2) vers le premier mode de fonctionnement (F1) étant réalisé suite à l'attraction magnétique de l'aimant (4) sur l'insert (20) lorsque le récipient de cuisson (10) est positionné à son emplacement (2) déterminé et que l'insert (20) présente une température inférieure à sa température de Curie (TCx), et
le passage du premier mode de fonctionnement (F1) vers le deuxième mode de fonctionnement (F2) étant réalisé suite à la perte de l'attraction magnétique de l'aimant (4) sur l'insert (20) lorsque le récipient de cuisson (10) est positionné à son emplacement (2) déterminé et que l'insert (20) présente une température supérieure ou égale à sa température de Curie (TCx) ou bien lorsque le récipient de cuisson (10) est retiré de son emplacement (2) déterminé.

2. Système de cuisson (300) selon la revendication 1, dans lequel le moyen de détection (8) comprend un contact électrique (5) ou une barrière optique d'un contact optique relié mécaniquement à l'aimant (4) par l'intermédiaire d'un moyen de liaison (6).

3. Système de cuisson (300) selon la revendication 1, dans lequel le moyen de détection (8) comprend un capteur magnétique positionné de manière fixe relativement au dispositif de chauffage (1) et présentant un premier état de détection dans lequel la valeur d'une grandeur caractéristique du champ magnétique mesurée par le capteur magnétique dépasse une valeur seuil prédéfinie lorsque l'aimant (4) est dans sa première position (P1), et un deuxième état de détection dans lequel la valeur de la grandeur caractéristique du champ magnétique mesurée par le capteur magnétique ne dépasse pas la valeur seuil prédéfinie lorsque l'aimant (4) est dans sa deuxième position (P2) et que le récipient de cuisson (10) est positionné à son emplacement (2) déterminé.

4. Système de cuisson (300) selon la revendication 3, dans lequel le capteur magnétique est monté sur un circuit magnétique agencé pour canaliser les lignes de champ magnétique de l'aimant (4).

5. Système de cuisson (300) selon l'une des revendications 1 à 4, dans lequel l'unité de traitement du signal délivré par le moyen de détection (8) est agencée pour réaliser au moins une des actions suivantes :
- couper l'alimentation des moyens de chauffage (3), ou
- réguler la puissance des moyens de chauffage (3), et/ou
- déclencher une alerte à destination d'un utilisateur.

6. Système de cuisson (300) selon l'une des revendications 1 à 5, comprenant des moyens de rappel (7) de l'aimant (4) vers sa deuxième position (P2), les moyens de rappel (7) comprenant de préférence un ressort.

7. Système de cuisson (300) selon l'une des revendications 1 à 6, dans lequel l'aimant (4) se déplace entre sa première position (P1) et sa deuxième position (P2) selon une direction transversale à une surface plane (21) de l'insert (20) lorsque le récipient de cuisson (10) est positionné à son emplacement (2) déterminé.

8. Système de cuisson (300) selon l'une des revendications 1 à 7, dans lequel les moyens de chauffage (3) comprennent un inducteur magnétique, un foyer radiant, un foyer halogène, un foyer par conduction thermique, et/ou un foyer par convection thermique.

9. Système de cuisson (300) selon l'une des revendications 1 à 8, dans lequel l'aimant (4) est positionné de manière excentrée par rapport à l'emplacement (2) déterminé pour le récipient de cuisson (10) dans le dispositif de chauffage (1).

10. Système de cuisson (300) selon l'une des revendications 1 à 9, dans lequel le dispositif de chauffage (1) comprend une pluralité d'aimants (4), chacune de la première position (P1) et de la deuxième position (P2) d'un aimant (4) étant associée respectivement au premier mode de fonctionnement (F1) et au deuxième mode de fonctionnement (F2) du dispositif de chauffage (1).

11. Système de cuisson (300) selon l'une des revendications 9 ou 10, comprenant des moyens d'indexation pour indiquer une position relative du récipient de cuisson (10) par rapport au dispositif de chauffage (1) lorsque le récipient de cuisson (10) est positionné à son emplacement (2) déterminé du dispositif de chauffage (1).

12. Système de cuisson (300) selon l'une des revendications 1 à 11, dans lequel l'insert (20) est positionné dans le fond (12) du récipient de cuisson (10).

13. Système de cuisson (300) selon la revendication 12, dans lequel le fond (12) du récipient de cuisson (10) comprend une pluralité d'inserts (20a, 20b, 20c) présentant chacun des températures de Curie (TCa, TCb, TCc) déterminées différentes.

14. Système de cuisson (300) selon la revendication 13, dans lequel les inserts (20a, 20b, 20c) sont répartis le long de tout ou partie de la circonférence d'un même cercle.

15. Système de cuisson (300) selon l'une des revendications 12 à 14, dans lequel le récipient de cuisson (10) est un ustensile de cuisine ou bien une cuve amovible d'un appareil électrique.

16. Système de cuisson (300) selon l'une des revendications 12 à 15 comprenant un kit (100) de récipients de cuisson (10) comprenant une pluralité de récipients de cuisson (10) de même type, dans lequel est/sont disposé(s) un ou plusieurs inserts (20, 20a, 20b, 20c) à température de Curie (TCa, TCb, TCc) déterminée, ladite ou au moins une desdites température(s) de Curie (TCa, TCb, TCc) déterminée(s) étant différente(s) d'un récipient de cuisson (10) de même type à un autre.

17. Système de cuisson (300) selon l'une des revendications 12 à 16 comprenant un kit d'inserts (200) amovibles pour le récipient de cuisson (10) ou le cas échéant le kit (100) de récipients de cuisson (10), dans lequel chaque insert (20A, 20B, 20C, 20D) comprend des moyens de fixation complémentaires de moyens de fixations disposés sur le ou les récipients de cuisson (10), par exemple du type quart de tour, à baïonnette, ou du type filetage hélicoïdal, chaque insert (20A, 20B, 20C, 20D) du kit d'inserts (200) présentant une température de Curie (TCA, TCB, TCC, TCD) déterminée différente d'un insert (20A, 20B, 20C, 20D) à l'autre.

18. Procédé d'utilisation d'un système (300) de cuisson selon la revendication 10 et la revendication 14, comprenant une étape consistant à déplacer en rotation le récipient de cuisson (10) dans son emplacement (2) déterminé du dispositif de chauffage (1) de manière à amener un insert (20a, 20b, 20c) déterminé parmi la pluralité d'inserts (20a, 20b, 20c), en regard de l'aimant (4) du dispositif de chauffage (1).

## Patentansprüche

1. Kochsystem (300), umfassend:
- einen Kochbehälter (10), umfassend einen Körper (11) und einen ferromagnetischen Einsatz (20) mit vorbestimmter Curie-Temperatur (TCx), der im Körper (11) angeordnet ist,
- eine Heizvorrichtung (1) für den Kochbehälter (10), der dazu vorgesehen ist, an einer bestimmten Stelle (2) der Heizvorrichtung (1) positioniert zu werden, wobei der Kochbehälter (10) angepasst ist, positioniert zu werden, um von der Heizvorrichtung (1) erhitzt zu werden,
wobei die Heizvorrichtung (1) umfasst:
- Heizmittel (3), wobei die Heizmittel (3) geeignet sind, den Kochbehälter (10) und seinen Einsatz (20) zu erhitzen, wenn der Kochbehälter (10) an seiner bestimmten Stelle (2) der Heizvorrichtung (1) positioniert ist,
wobei das Kochsystem **dadurch gekennzeichnet ist, dass** die Heizvorrichtung (3) Folgendes umfasst:
- einen Magnet (4), der derart positioniert ist, dass der Einsatz (20) des Kochbehälters (10) dem Magnet (4) zugewandt ist, wenn der Kochbehälter (10) an seiner bestimmten Stelle (2) positioniert ist, wobei der Magnet (4) zwischen einer ersten Position (P1) proximal zum Einsatz (20) und einer zweiten Position (P2) distal zum Einsatz (20) beweglich ist, wenn der Kochbehälter (10) an seiner bestimmten Stelle (2) positioniert ist,
- ein Erfassungsmittel (8) der Position des Magnets (4),
- eine Behandlungseinheit eines durch das Erfassungsmittel (8) gelieferten Signals,
und dadurch, dass die Heizvorrichtung (1) einen ersten Betriebsmodus (F1) aufweist, in dem der Magnet (4) sich in seiner ersten Position (P1) befindet und das Erhitzen des Kochbehälters (10) durch die Heizmittel (3) erlaubt ist, und einen zweiten Betriebsmodus (F2), in dem der Magnet (4) sich in seiner zweiten Position (P2) befindet und das Erhitzen des Kochbehälters (10) durch die Heizmittel (3) verboten ist,
wobei der Übergang vom zweiten Betriebsmodus (F2) in den ersten Betriebsmodus (F1) im Anschluss an die magnetische Anziehung des Magnets (4) auf den Einsatz (20) durchgeführt wird, wenn der Kochbehälter (10) an seiner bestimmten Stelle (2) positioniert ist und der Einsatz (20) eine niedrigere Temperatur als seine Curie-Temperatur (TCx) aufweist, und
wobei der Übergang vom ersten Betriebsmodus (F1) in den zweiten Betriebsmodus (F2) im Anschluss an den Verlust der magnetischen Anziehung des Magnets (4) auf den Einsatz (20) durchgeführt wird, wenn der Kochbehälter (10) an seiner bestimmten Stelle (2) positioniert ist und der Einsatz (20) eine höhere oder gleich hohe Temperatur wie seine Curie-Temperatur (TCx) aufweist oder wenn der Kochbehälter (10) von seiner bestimmten Stelle (2) entnommen ist.

2. Kochsystem (300) nach Anspruch 1, wobei das Erfassungsmittel (8) einen elektrischen Kontakt (5) oder eine optische Barriere eines optischen Kontakts, der mittels eines Verbindungsmittels (6) mechanisch mit dem Magnet (4) verbunden ist, umfasst.

3. Kochsystem (300) nach Anspruch 1, wobei das Erfassungsmittel (8) einen Magnetsensor umfasst, der relativ zur Heizvorrichtung (1) auf feste Weise positioniert ist und einen ersten Erfassungszustand aufweist, bei dem der Wert einer charakteristischen Größe des Magnetfelds, der von dem Magnetsensor gemessen wird, einen vordefinierten Schwellenwert überschreitet, wenn der Magnet (4) in seiner ersten Position (P1) ist, und einen zweiten Erfassungszustand, bei dem der Wert der charakteristischen Größe des Magnetfelds, der von dem Magnetsensor gemessen wird, den vordefinierten Schwellenwert nicht überschreitet, wenn der Magnet (4) in seiner zweiten Position (P2) ist und der Kochbehälter (10) an seiner bestimmten Stelle (2) positioniert ist.

4. Kochsystem (300) nach Anspruch 3, wobei der Magnetsensor an einem Magnetkreis montiert ist, der eingerichtet ist, um die Linien des Magnetfelds des Magnets (4) zu kanalisieren.

5. Kochsystem (300) nach einem der Ansprüche 1 bis 4, wobei die Behandlungseinheit des durch das Erfassungsmittel (8) gelieferten Signals eingerichtet ist, um mindestens eine der folgenden Aktionen durchzuführen:
- Unterbrechen der Stromversorgung der Heizmittel (3), oder
- Regulieren der Leistung der Heizmittel (3), und/oder
- Auslösen einer an einen Benutzer gerichteten Warnmeldung.

6. Kochsystem (300) nach einem der Ansprüche 1 bis 5, umfassend Rückstellmittel (7) des Magnets (4) zu seiner zweiten Position (P2), wobei die Rückstellmittel (7) vorzugsweise eine Feder umfassen.

7. Kochsystem (300) nach einem der Ansprüche 1 bis 6, wobei sich der Magnet (4) zwischen seiner ersten Position (P1) und seiner zweiten Position (P2) gemäß einer zu einer ebenen Oberfläche (21) des Einsatzes (20) quer verlaufenden Richtung bewegt, wenn der Kochbehälter (10) an seiner bestimmten Stelle (2) positioniert ist.

8. Kochsystem (300) nach einem der Ansprüche 1 bis 7, wobei die Heizmittel (3) einen magnetischen Induktor, eine Strahlungsfeuerstelle, eine Halogenfeuerstelle, eine Feuerstelle durch thermische Konduktion und/oder eine Feuerstelle durch thermische Konvektion umfassen.

9. Kochsystem (300) nach einem der Ansprüche 1 bis 8, wobei der Magnet (4) in Bezug auf die bestimmte Stelle (2), für den Kochbehälter (10) in der Heizvorrichtung (1) auf exzentrische Weise positioniert ist.

10. Kochsystem (300) nach einem der Ansprüche 1 bis 9, wobei die Heizvorrichtung (1) eine Vielzahl von Magneten (4) umfasst, wobei jede der ersten Position (P1) und der zweiten Position (P2) eines Magnets (4) dem ersten Betriebsmodus (F1) bzw. dem zweiten Betriebsmodus (F2) der Heizvorrichtung (1) zugeordnet ist.

11. Kochsystem (300) nach einem der Ansprüche 9 oder 10, umfassend Indexierungsmittel, um eine relative Position des Kochbehälters (10) in Bezug auf die Heizvorrichtung (1) anzugeben, wenn der Kochbehälter (10) an seiner bestimmten Stelle (2) der Heizvorrichtung (1) positioniert ist.

12. Kochsystem (300) nach einem der Ansprüche 1 bis 11, wobei der Einsatz (20) am Boden (12) des Kochbehälters (10) positioniert ist.

13. Kochsystem (300) nach Anspruch 12, wobei der Boden (12) des Kochbehälters (10) eine Vielzahl von Einsätzen (20a, 20b, 20c) umfasst, die jeweils unterschiedliche bestimmte Curie-Temperaturen (TCa, TCb, TCc) aufweisen.

14. Kochsystem (300) nach Anspruch 13, wobei die Einsätze (20a, 20b, 20c) entlang des gesamten oder eines Teils des Umfangs eines selben Kreises verteilt sind.

15. Kochsystem (300) nach einem der Ansprüche 12 bis 14, wobei der Kochbehälter (10) ein Küchengerät oder ein abnehmbarer Innenbehälter einer elektrischen Einrichtung ist.

16. Kochsystem (300) nach einem der Ansprüche 12 bis 15, umfassend einen Satz (100) von Kochbehältern (10), der eine Vielzahl von Kochbehältern (10) des gleichen Typ umfasst, in dem ein oder mehrere Einsätze (20, 20a, 20b, 20c) mit bestimmter Curie-Temperatur (TCa, TCb, TCc) angeordnet ist/sind, wobei die oder mindestens eine der bestimmten Curie-Temperatur(en) (TCa, TCb, TCc) sich von einem Kochbehälter (10) des gleichen Typs zu einem anderen unterscheidet.

17. Kochsystem (300) nach einem der Ansprüche 12 bis 16, umfassend einen Satz von abnehmbaren Einsätzen (200) für den Kochbehälter (10) oder gegebenenfalls den Satz (100) von Kochbehältern (10) wobei jeder Einsatz (20A, 20B, 20C, 20D) Befestigungsmittel umfasst, die komplementär sind zu Befestigungsmitteln, die auf dem oder den Kochbehältern (10) angeordnet sind, beispielsweise vom Typ Vierteldrehung, Bajonett oder spiralförmiges Gewinde, wobei jeder Einsatz (20A, 20B, 20C, 20D) des Satzes von Einsätzen (200) eine bestimmte Curie-Temperatur (TCA, TCB, TCC, TCD) aufweist, die sich von einem Einsatz (20A, 20B, 20C, 20D) zum anderen unterscheidet.

18. Verfahren zur Verwendung eines Kochsystems (300) nach Anspruch 10 und Anspruch 14, umfassend einen Schritt, bestehend aus der Drehbewegung des Kochbehälters (10) in seiner bestimmten Stelle (2) der Kochvorrichtung (1) derart, dass ein bestimmter Einsatz (20a, 20b, 20c) aus der Vielzahl von Einsätzen (20a, 20b, 20c) im Vergleich zum Magnet (4) der Heizvorrichtung (1) geführt wird.

## Claims

1. Cooking system (300) including:
- a cooking vessel (10) comprising a body (11) and a ferromagnetic insert (20) having a determined Curie temperature (TCx) arranged in the body (11),
- a heating device (1) for the cooking vessel (10) to be positioned at a determined location (2) of the heating device (1) wherein said cooking vessel (10) is capable of being positioned to be heated by said heating device (1),
said heating device (1) comprising:
- heating means (3), said heating means (3) being able to heat the cooking vessel (10) and its insert (20) when the cooking vessel (10) is positioned at its determined location (2) of the heating device (1),
said cooking system **characterised in that** the heating device (3) comprises:
- a magnet (4) positioned such that the insert (20) of the cooking vessel (10) is facing said magnet (4) when the cooking vessel (10) is positioned at its determined location (2), said magnet (4) able to move between a first proximal position (P1) of the insert (20) and a second distal position (P2) of the insert (20) when the cooking vessel (10) is positioned at its determined location (2),
- a means for detecting (8) the position of the magnet (4),
- a unit for processing a signal delivered by the detection means (8),
and **in that** the heating device (1) has a first operating mode (F1) wherein the magnet (4) is in its first position (P1) and the heating of the cooking vessel (10) by the heating means (3) is allowed, and a second operating mode (F2) wherein the magnet (4) is in its second position (P2) and the heating of the cooking vessel (10) by the heating means (3) is prohibited,
with the switching from the second operating mode (F2) to the first operating mode (F1) being carried out following the magnetic attraction of the magnet (4) on the insert (20) when the cooking vessel (10) is positioned at its determined location (2) and when the insert (20) has a temperature below its Curie temperature (TCx), and
the switching from the first operating mode (F1) to the second operating mode (F2) being carried out following the loss of magnetic attraction of the magnet (4) on the insert (20) when the cooking vessel (10) is positioned at its determined location (2) and when the insert (20) has a temperature greater than or equal to its Curie temperature (TCx) or when the cooking vessel (10) is withdrawn from its determined location (2).

2. Cooking system (300) according to claim 1, wherein the detection means (8) comprises an electrical contact (5) or a light barrier of an optical contact mechanically connected to the magnet (4) via a connecting means (6).

3. Cooking system (300) according to claim 1, wherein the detection means (8) comprises a magnetic sensor positioned in a fixed manner in relation to the heating device (1) and having a first detection state wherein the value of a characteristic magnitude of the magnetic field measured by the magnetic sensor exceeds a predefined threshold value when the magnet (4) is in its first position (P1 ), and a second detection state wherein the value of the characteristic magnitude of the magnetic field measured by the magnetic sensor does not exceed the predefined threshold value when the magnet (4) is in its second position (P2) and the cooking vessel (10) is positioned at its determined location (2).

4. Cooking system (300) according to claim 3, wherein the magnetic sensor is mounted on a magnetic circuit arranged to channel the magnetic field lines of the magnet (4).

5. Cooking system (300) according to one of claims 1 to 4, wherein the unit for processing the signal delivered by the detection means (8) is arranged to carry out at least one of the following actions:
- cut off the supply of the heating means (3),
- adjust the power of the heating means (3) and/or
- trigger an alert intended for a user.

6. Cooking system (300) according to one of claims 1 to 5, comprising means of returning (7) the magnet (4) to its second position (P2), the means of return (7) preferably comprising a spring.

7. Cooking system (300) according to one of claims 1 to 6, wherein the magnet (4) is displaced between its first position (P1) and its second position (P2) according to a direction transversal to a flat surface (21) of the insert (20) when the cooking vessel (10) is positioned at its determined location (2).

8. Cooking system (300) according to one of claims 1 to 7, wherein the heating means (3) comprise a magnetic inductor, a radiant element, a halogen element, a thermal conduction elements, and/or a thermal convection element.

9. Cooking system (300) according to one of claims 1 to 8, wherein the magnet (4) is positioned eccentrically with respect to the determined location (2) for the cooking vessel (10) in the heating device (1).

10. Cooking system (300) according to one of claims 1 to 9, wherein the heating device (1) comprises a plurality of magnets (4), each one of the first position (P1) and of the second position (P2) of a magnet (4) being associated respectively with the first operating mode (F1) and with the second operating mode (F2) of the heating device (1).

11. Cooking system (300) according to one of claims 9 or 10, comprising indexing means to indicate a relative position of the cooking vessel (10) with respect to the heating device (1) when the cooking vessel (10) is positioned at its determined location (2) of the heating device (1).

12. Cooking system (300) according to one of claims 1 to 11, wherein the insert (20) is positioned at the bottom (12) of the cooking vessel (10).

13. Cooking system (300) according to claim 12, wherein the bottom (12) of the cooking vessel (10) comprises a plurality of inserts (20a, 20b, 20c) each having different determined Curie temperatures (TCa, TCb, TCc).

14. Cooking system (300) according to claim 13, wherein the inserts (20a, 20b, 20c) are distributed along all or a portion of the circumference of the same circle.

15. Cooking system (300) according to one of claims 12 to 14, wherein the cooking vessel (10) is a cooking utensil or a removable tank of an electrical appliance.

16. Cooking system (300) according to one of claims 12 to 15 comprising a kit (100) of cooking vessels (10) comprising a plurality of cooking vessels (10) of the same type, wherein is/are arranged one or more inserts (20, 20a, 20b, 20c) having a determined Curie temperature (TCa, TCb, TCc), said or at least one of said determined Curie temperature(s) (TCa, TCb, TCc) being different from a cooking vessel (10) from one type to another.

17. Cooking system (300) according to one of claims 12 to 16 comprising a kit of removable inserts (200) for the cooking vessel (10) or if necessary the kit (100) of cooking vessels (10), wherein each insert (20A, 20B, 20C, 20D) comprises means of fastening complementary with the means of fastening arranged on the cooking vessel or vessels (10), for example of the quarter turn type, bayonet, or of the helical threading type, each insert (20A, 20B, 20C, 20D) of the kit of inserts (200) having a determined Curie temperature (TCA, TCB, TCC, TCD) different from one insert (20A, 20B, 20C, 20D) to another.

18. Method for using a cooking system (300) according to claim 10 and claim 14, comprising a step consisting à displacing in rotation the cooking vessel (10) in its determined location (2) of the heating device (1) so as to bring a determined insert (20a, 20b, 20c) among the plurality of inserts (20a, 20b, 20c), facing the magnet (4) of the heating device (1).
